# FASCICULE DE BREVET EUROPEEN

(11) **EP 1 771 981 B1**
(45) Date de publication et mention de la délivrance du brevet: **10.08.2011**
(21) Numéro de dépôt: 05778640.2
(22) Date de dépôt: 17.06.2005
(51) Int. Cl.: H04L 12/56

(54) **PROCEDE DE CONTROLE DE ROUTAGE DANS UN RESEAU DE PAQUETS SUPPORTE PAR UN RESEAU DE TRANSPORT**
VERFAHREN ZUR ROUTING-STEUERUNG IN EINEM DURCH EIN TRANSPORTNETZWERK GESTÜTZTEM PAKETNETZWERK
METHOD FOR CONTROLLING ROUTING IN A PACKET NETWORK SUPPORTED BY A TRANSPORT NETWORK

(30) Priorité: 27.07.2004 FR 0408268
(43) Date de publication de la demande: 11.04.2007
(73) Titulaire: FRANCE TELECOM, 75015 Paris (FR)
(72) Inventeur: LE ROUX, Jean-Louis, F-22300 Lannion (FR); CALVIGNAC, Géraldine, F-22560 Trebeurden (FR)
(86) Numéro de dépôt international: PCT/FR2005/001513
(87) Numéro de publication internationale: WO 2006/021631

(56) Documents cités:
- WO-A-03/019870
- WO-A-2004/034653
- US-B1- 6 275 470
- GUERIN R A ET AL: "QoS routing mechanisms and OSPF extensions" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, vol. 3, 3 novembre 1997 (1997-11-03), pages 1903-1908, XP010254897 ISBN: 0-7803-4198-8
- LEE W C: "TOPOLOGY AGGREGATION FOR HIERARCHICAL ROUTING IN ATM NETWORKS" COMPUTER COMMUNICATION REVIEW, ASSOCIATION FOR COMPUTING MACHINERY. NEW YORK, US, vol. 25, no. 2, 1 avril 1995 (1995-04-01), pages 82-92, XP000570739 ISSN: 0146-4833

## Description

La présente invention concerne un procédé de contrôle du routage dans un réseau de paquets supporté par un réseau de transport autorisant la création/suppression dynamique de liens de transport des paquets dudit réseau de paquets. Elle concerne également un système de contrôle de routage, une unité de contrôle dynamique du routage et une unité de gestion des adjacences pour la mise en oeuvre dudit procédé de contrôle du routage.

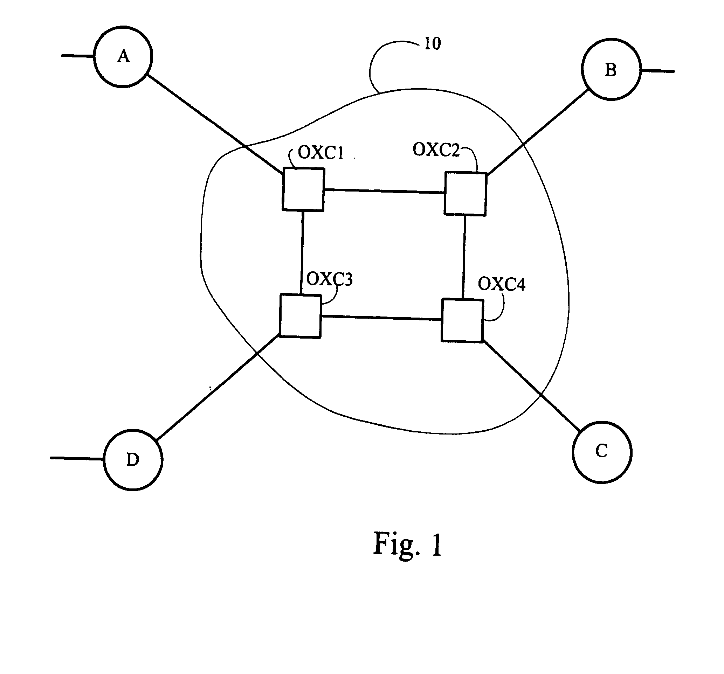

On appelle un réseau de paquets un réseau qui assure le transfert des paquets porteurs d'information ainsi que les fonctions de routage de ces paquets. Les paquets dont il est question dans la présente description sont par exemple des paquets IP (Internet Protocol). La présente invention s'applique tout particulièrement à un réseau de paquets qui a la structure, selon le modèle dit à superposition de couches (overlay), dont un exemple est représenté à la Fig. 1. Il comprend des routeurs, par exemple au nombre de quatre A, B, C et D, reliés les uns les autres par un réseau de transport coeur 10, par exemple un réseau de transport optique, comportant des commutateurs optiques OXC1 à OXC4 capables de faire transiter les paquets traités par chaque routeur A, B, C, D. Une interface client-réseau UNI assure le contrôle logique entre un routeur et le réseau coeur.

Plus précisément, la présente invention s'applique au cas d'un réseau architecturé selon le modèle dit "overlay" où le domaine des paquets (par exemple le domaine IP) est relativement indépendant du domaine du réseau de transport coeur (par exemple le domaine optique). Le réseau coeur assure des connexions qui sont vues du réseau de paquets comme étant point à point. Le réseau de paquets agit vis-à-vis du réseau coeur comme un client. De plus, le protocole de routage du réseau de paquets et celui de réseau coeur sont indépendants.

L'interface entre un routeur et un commutateur du réseau coeur 10 est une interface de contrôle logique qui prévoit l'émission de messages de signalisation entre un routeur périphérique et le commutateur optique du réseau optique auquel il est relié pour la création, la destruction, la modification, une demande de statuts de circuits optiques du réseau optique. Il peut s'agir d'une interface entre un réseau de paquets IP et un réseau de transport optique dite interface O-UNI (Optical-User Network Interface) telle que celles qui sont décrites par les organismes de normalisation OIF (Optical Internetworking Forum) et IETF (Internet Engineering Task Force). Dans ce cas, les messages de signalisation sont basés sur le protocole de réservation de ressources avec ingénierie de trafic RSVP-TE (Resource ReserVation Protocol - Traffic Engineering).

Comme cela est le cas pour un réseau IP, un réseau à commutation de paquets met généralement en oeuvre un protocole de routage dont la fonction essentielle est de déterminer pour des paquets devant transiter d'un routeur à un autre, le chemin le moins coûteux (on dit aussi le chemin le plus court) sachant qu'à chaque lien d'un routeur à un autre auquel il est relié est affecté un coût, également appelé métrique. Le protocole de routage dont il est question ici est un protocole de routage à état de lien (link state), par exemple du type interne, comme un protocole du type IGP link state (Interior Gateway Protocol : Protocole intra-domaine), tel que notamment le protocole dit OSPF (Open Shortest Path First). Ce dernier fait notamment l'objet de la requête pour commentaires 2328 (RFC 2328). Il pourrait également s'agir du protocole ISIS (Intermediate System to Intermediate System : système intermédiaire à système intermédiaire) décrit notamment dans la requête pour commentaires 3784 (RFC 3784).

Le principe de fonctionnement d'un protocole du type IGP link state est le suivant. A chaque adjacence du réseau IP que le protocole lui-même peut déterminer par un protocole particulier dit protocole Hello, est associée une métrique dont la valeur est représentative d'une caractéristique de l'adjacence : une valeur arbitraire attribuée par l'administrateur du réseau (par exemple une valeur de 1 représentant un routeur traversé, le délai de transmission sur le lien considéré, la fiabilité du lien, etc.). La métrique peut également être appelée coût du lien considéré. Le protocole calcule alors la route vers l'ensemble des routeurs du réseau en utilisant un algorithme "du plus court chemin d'abord" SPF, la longueur d'un chemin (ou le coût d'un chemin) étant déterminée par sommation des métriques des liens formant ce chemin.

La présente invention ne s'intéresse donc qu'au réseau de paquets qui, dans un exemple de réalisation qui sera décrit, est un réseau IP, avec un protocole de routage à état de liens, par exemple du type IGP link state.

On appelle "adjacence" un lien qui lie deux routeurs qui sont devenus voisins pour échanger des informations de routage, c'est-à-dire qu'ils sont non seulement voisins parce qu'ils ont chacun une interface à un même réseau mais aussi qu'ils ont synchronisé leurs tables de topologie respectives.

Les capacités de contrôle offertes par un protocole de routage à état de lien, tel que le protocole IGP, ne sont pas adéquates pour effectuer de l'ingénierie de trafic (TE). Du fait que les algorithmes de routage à trajet le plus court (SPF : Shortest Path First) sont optimisés sur la base de simples métriques, ils ne prennent pas en compte les caractéristiques de trafic et de disponibilité de bande passante pour leurs décisions de routage. Ainsi, des congestions peuvent avoir lieu lorsque les trajets les plus courts de plusieurs flux de trafic convergent sur de mêmes liens ou de mêmes routeurs ou encore lorsqu'un flux de trafic converge sur un lien ou un routeur qui ne possède pas une bande passante suffisante pour le supporter.

Le modèle à superposition de couches (modèle overlay) décrit ci-dessus en relation avec la Fig. 1 permet de résoudre en partie ces problèmes en créant des topologies virtuelles au-dessus de la topologie physique du réseau de paquets. Une topologie virtuelle est ainsi constituée de circuits virtuels qui apparaissent comme des liens physiques pour le protocole de routage. De cette manière, le contrôle du trafic et des ressources peut être envisagé au niveau de la topologie virtuelle.

Un exemple de mise en oeuvre de cette superposition d'une topologie virtuelle consiste à faire supporter par le réseau de paquets un réseau de transport optique qui lui assure l'ingénierie de trafic. Ainsi, dans l'article intitulé "Distributed Virtual Network Topology Control Mechanism in GMPLS-Based Multiregion Networks" paru dans IEEE Journal on Selected Areas in Communications, vol 21, no.8, ppp : 1254 - 1262 d'octobre 2003, dont les auteurs sont K. Shiomoto and all, est décrite une méthode de reconfiguration dynamique de la topologie virtuelle du réseau (VNT : Virtual Network Topology) qui est distribuée (c'est-à-dire qu'il n'y a aucune coordination centralisée dans l'exécution de la reconfiguration du réseau) et qui consiste essentiellement dans l'utilisation d'un protocole de routage à état de liens (du type IGP mentionné ci-dessus) pour que chaque noeud partage la même topologie virtuelle et une demande de trafic sur les trajets optiques individuels, lequel trafic est mesuré au noeud d'origine. Le protocole de routage à état de liens est utilisé pour disséminer les informations portant sur la topologie virtuelle et celles portant sur la demande de trafic sur le trajet optique. Chaque noeud calcule la nouvelle topologie et la compare à la présente afin d'identifier les trajets optiques qui devraient être activés/désactivés. Lorsque ce noeud est le noeud d'origine du trajet optique, la procédure d'activation/désactivation est mise en oeuvre. Lorsque chaque noeud a ainsi agi, la topologie VNT est reconfigurée et le trafic IP est re-routé sur la nouvelle topologie.

L'algorithme de calcul de la nouvelle topologie ajoute de nouveaux trajets optiques afin de limiter les congestions qui peuvent apparaître, compte tenu du trafic et par contre, supprime un trajet optique qui est sous-utilisé. Deux seuils de trafic (un haut et un bas) sont respectivement définis pour les trajets optiques congestionnés et les trajets optiques sous-utilisés. Si la demande de trafic sur un trajet optique est supérieure au seuil haut, un nouveau trajet optique est créé afin que le trafic sur le trajet optique congestionné soit re-routé. Les noeuds d'extrémité du nouveau trajet optique sont sélectionnés parmi toutes les adjacences des noeuds d'extrémité du lien congestionné. Par contre, si la demande de trafic sur un trajet optique est inférieure au seuil bas, ce trajet optique est supprimé à condition que cela n'introduise alors pas une congestion.

Plus précisément, le document dont il est question ici décrit une méthode de reconfiguration dynamique virtuelle et distribuée de la topologie de réseaux de paquets à protocole Internet (IP) supportant la commutation MPLS-TE ou GMPLS (Generalized MPLS : voir à ce sujet les requêtes pour commentaires RFC 3471 et suivantes) sur des réseaux optiques à multiplexage par division de longueurs d'ondes (WDM : Wavelength-division-multiplexing). Cette méthode consiste en un mécanisme qui, en fonction de la charge de trafic sur des chemins du type TE-LSP, décide d'établir ou de supprimer des circuits optiques du réseau WDM.

Ce document décrit donc la mise à jour dynamique de la topologie d'un réseau en fonction de la matrice de trafic.

Le mécanisme qui est décrit dans le document mentionné ci-dessus présente néanmoins l'inconvénient de ne pas proposer de mécanismes capables de contrôler l'impact d'une création/destruction de liens sur le protocole de routage. En effet, on a pu mettre en évidence un tel impact qui crée des instabilités de la topologie et des changements trop fréquents. Il peut même en résulter des congestions ou des sous-utilisations de certains liens. Un autre exemple d'un procédé de contrôle du routage est décrite dans la publication XP 010 25 4897.

Le but de la présente invention est donc de proposer un procédé de contrôle de la topologie d'un réseau de paquets supporté par un réseau de transport autorisant la création/suppression dynamique de liens de transport des paquets dudit réseau de paquets qui ne présente pas les inconvénients des procédés de l'art antérieur tel que celui qui est décrit dans le document mentionné ci-dessus.

La présente invention concerne donc un procédé de contrôle du routage dans un réseau de paquets supporté par un réseau de transport autorisant la création/suppression dynamique de liens de transport des paquets dudit réseau de paquets selon la revendication 1.

Selon une autre caractéristique de la présente invention, pour le lien considéré, la valeur de la métrique virtuelle est choisie relativement à celle de la métrique réelle soit égale soit inférieure.

Selon une autre caractéristique de la présente invention, pour le lien considéré entre deux routeurs, la valeur de la métrique virtuelle est choisie relativement à celle de la somme des métriques réelles des chemins indirects reliant lesdits deux routeurs soit égale soit inférieure.

Selon une autre caractéristique de la présente invention, lorsque ledit lien est dans son état de connexion virtuelle, un test de connectivité est réalisé.

La présente invention concerne également un système de contrôle du routage dans un réseau de paquets supporté par un réseau de transport autorisant la création/suppression dynamique de liens de transport des paquets dudit réseau de paquets. Ledit système est du type qui comprend
- une unité de gestion qui, en fonction d'une métrique affectée à chaque lien du réseau de paquets, détermine le chemin le plus court entre ledit routeur d'extrémité de tête et le routeur d'extrémité de queue de la même connexion,
- une unité d'annonce aux autres routeurs dudit réseau de la métrique affectée à chaque lien du réseau de paquets,
- une unité pour la création/destruction d'un lien ou d'une connexion entre ledit routeur d'extrémité de tête et le routeur d'extrémité de queue de la même communication lorsque le chemin le plus court passe par ledit lien et que le trafic entre lesdits deux routeurs remplit des conditions de création/destruction, et
- une unité de gestion dynamique de la topologie du réseau.

Il est caractérisé en ce que ladite unité de gestion dynamique de la topologie du réseau est prévue pour :
- commander ladite une unité de gestion de manière à créer une adjacence virtuelle et à annoncer ladite adjacence virtuelle comme un lien avec une métrique virtuelle, lorsque ledit lien est susceptible de faire l'objet d'une connexion directe et que le trafic entre lesdits deux routeurs ne remplit pas lesdites conditions de création/destruction, et
- commander ladite unité de manière à créer une connexion réelle entre lesdits deux routeurs et ladite unité de gestion de manière à créer une adjacence réelle et à annoncer ladite adjacence réelle comme un lien avec une métrique réelle, lorsque le trafic entre lesdits deux routeurs remplit lesdites conditions de création/destruction.

Avantageusement, ledit système de contrôle du routage dans un réseau de paquets comporte une unité de test de connectivité pour tester la connectivité dudit lien.

De même, il est tel que ladite unité de gestion inclut une unité de gestion des adjacences réelles associée à une table des adjacences réelles et une unité de gestion virtuelles associée à une table des adjacences virtuelles, ladite unité d'annonce étant prévue pour annoncer aux autres routeurs dudit réseau les métriques contenues dans l'une et l'autre desdites tables.

La présente invention concerne encore une unité de gestion dynamique de la topologie d'un réseau de paquets supporté par un réseau de transport autorisant la création/suppression dynamique de liens de transport des paquets dudit réseau de paquets, ladite unité étant prévue pour commander une unité de gestion qui, en fonction d'une métrique affectée à chaque lien du réseau de paquets, détermine le chemin le plus court entre ledit routeur d'extrémité de tête et le routeur d'extrémité de queue de la même connexion, une unité d'annonce aux autres routeurs dudit réseau de la métrique affectée à chaque lien du réseau de paquets et une unité pour la création/destruction d'un lien ou d'une connexion entre ledit routeur d'extrémité de tête et le routeur d'extrémité de queue de la même communication lorsque le chemin le plus court passe par ledit lien et que le trafic entre lesdits deux routeurs remplit des conditions de création/destruction. Elle est caractérisée en ce qu'elle est prévue pour :
- commander ladite une unité de gestion de manière à créer une adjacence virtuelle et à annoncer ladite adjacence virtuelle comme un lien avec une métrique virtuelle, lorsque ledit lien est susceptible de faire l'objet d'une connexion directe et que le trafic entre lesdits deux routeurs ne remplit pas lesdites conditions de création/destruction, et
- commander ladite unité de manière à créer une connexion réelle entre lesdits deux routeurs et ladite unité de gestion de manière à créer une adjacence réelle et à annoncer ladite adjacence réelle comme un lien avec une métrique réelle, lorsque le trafic entre lesdits deux routeurs remplit lesdites conditions de création/destruction.

La présente invention concerne enfin une unité de routage d'un réseau de paquets supporté par un réseau de transport autorisant la création/suppression dynamique de liens de transport des paquets dudit réseau de paquets, ladite unité, en fonction d'une métrique affectée à chaque lien du réseau de paquets, déterminant le chemin le plus court entre ledit routeur d'extrémité de tête et le routeur d'extrémité de queue de la même connexion, et incluant une unité d'annonce aux autres routeurs dudit réseau de la métrique affectée à chaque lien du réseau de paquets, ladite unité de routage étant destinée à la mise en oeuvre du procédé décrit ci-dessus. Elle est caractérisé en ce qu'elle inclut une unité de gestion des adjacences réelles associée à une table des adjacences réelles et une unité de gestion virtuelles associée à une table des adjacences virtuelles, ladite unité d'annonce étant prévue pour annoncer aux autres routeurs dudit réseau les métriques contenues dans l'une et l'autre desdites tables.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un exemple de structure d'un réseau auquel la présente invention peut s'appliquer,
La Fig. 2 est un schéma synoptique d'un système de reconfiguration dynamique de la topologie d'un réseau de paquets pouvant mettre en oeuvre le procédé objet de la présente invention,
La Fig. 3 montre les trois états que peut prendre un lien de paquets qui est traité selon le procédé de la présente invention, et
Les Figs. 4a et 4b montrent l'impact du procédé de la présente invention sur le routage des paquets dans un réseau, selon deux choix différents de métrique virtuelle allouée à un lien particulier de ce réseau.

Le réseau de paquets auquel s'applique la présente invention est par ailleurs conforme aux réseaux de paquets décrits dans le préambule de la présente description.

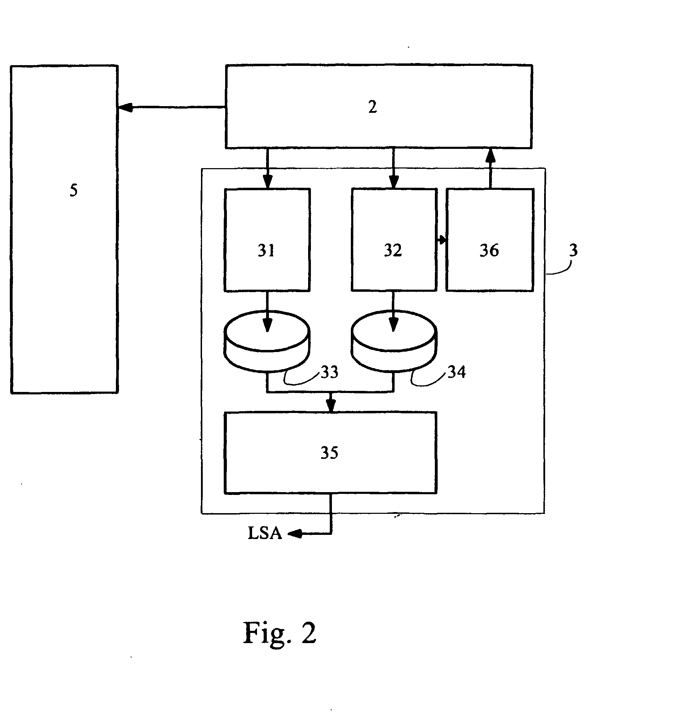

Le système de contrôle représenté à la Fig. 2 est essentiellement constitué d'une unité 2 de gestion dynamique de la topologie du réseau reliée fonctionnellement à une unité 5 de création/destruction de liens dans le réseau de transport (tel que le réseau de transport coeur 10 de la Fig. 1) assurant le transport physique des paquets du réseau de paquets. Il comporte également une unité 3 de gestion des liens du réseau IP qui est reliée à l'unité 2 de gestion de la topologie du réseau.

Alors que l'unité de gestion 3 est implémentée dans chacun des routeurs du réseau, les unités de gestion dynamique 2 et de création/destruction de liens 5 sont, soit également implémentées dans chacun des routeurs du réseau, soit des unités centralisées. Le procédé de contrôle du routage objet de la présente invention comporte des étapes qui sont mises en oeuvre par l'une ou l'autre de ces unités conformément à la description qui suit.

L'unité 5 de création/destruction de liens réalise l'interface entre l'unité de gestion 2 et le réseau de transport. Il s'agit d'une interface de contrôle logique qui prévoit l'émission de messages de signalisation entre un routeur de paquets A, B, C ou D du réseau de paquets (voir Fig. 1) et le commutateur optique OXC1 à OXC4 du réseau coeur 10 auquel il est relié pour la création, la destruction, la modification, une demande de statuts de circuits optiques du réseau optique, etc. Dans un mode préférentiel de réalisation de la présente invention, le réseau coeur 10 étant un réseau de transport optique, l'interface UNI est une interface dite O-UNI (voir préambule de la présente description.

L'unité 3 de gestion des liens du réseau IP comprend quant à elle une unité de gestion des adjacences réelles 31, une unité de gestion des adjacences virtuelles 32, une table des adjacences réelles 33 et une table des adjacences virtuelles 34. Elle comporte également une unité 35 (unité de flooding) d'annonce aux autres routeurs du réseau de paquets de l'état des interfaces du routeur considéré ainsi que de ses adjacences réelles et virtuelles. Les données qui décrivent cet état sont appelées LSA (Link State Advertisement).

On rappelle qu'une adjacence est un lien qui lie deux routeurs qui sont devenus voisins pour échanger des informations de routage, c'est-à-dire qu'ils sont non seulement voisins, mais aussi qu'ils ont synchronisé leurs tables de topologie respectives, ici appelées tables des adjacences.

L'unité 3 est une partie d'un protocole de routage du type IGP à état de lien (Interior Gateway Protocol link-state).

La fonction de l'unité 2 est la suivante. Pour chaque routeur qui est susceptible d'être raccordé directement au routeur concerné (par exemple le routeur A de la Fig. 1 qui est susceptible d'être raccordé directement au routeur B), l'unité 2 de gestion dynamique de la topologie du réseau de transport a pour fonction, d'une part, de demander à l'unité 3 de créer/détruire des adjacences virtuelles ou réelles et, d'autre part, de demander à l'unité 5 de créer/détruire des liens entre ces deux routeurs.

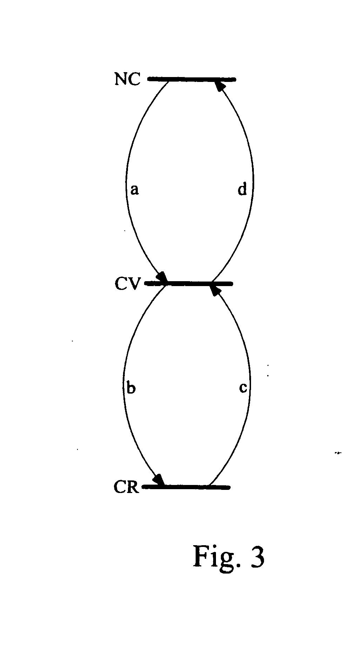

On va expliciter le fonctionnement de l'unité 2 au moyen de la Fig. 3. Sur cette Fig. 3, on a représenté trois états d'un lien : un état non connecté NC, un état de connexion virtuelle CV et un état de connexion réelle CR.

Lorsque deux routeurs ne sont pas susceptibles d'être directement connectables, le lien qui aurait pu relier directement ces deux routeurs est dans l'état non connecté NC.

Lorsqu'aucune connexion active entre deux routeurs qui sont susceptibles d'être connectés directement n'est effectuée, l'unité 2 demande à l'unité 3 de créer une adjacence virtuelle et de l'annoncer comme un lien classique mais avec une métrique spécifique Mv qui est dite métrique virtuelle. Le système passe dans l'état de connexion virtuelle CV (flèche a). L'unité de gestion des adjacences virtuelles 32 commande alors l'enregistrement dans la table 34 de la métrique virtuelle Mv pour le lien considéré.

Lorsque l'unité 2 décide d'établir une connexion réelle entre deux routeurs, elle demande à l'unité 3 de créer une adjacence réelle et de l'annoncer comme un lien classique avec la métrique réelle Mr dudit lien. Le lien considéré passe dans l'état de connexion réelle CR (flèche b). L'unité de gestion des adjacences réelles 31 commande alors l'enregistrement dans la table 33 de la métrique virtuelle Mr pour le lien considéré. Après un temps excédant au moins le temps nécessaire, d'une part, à la création de cette adjacence réelle et, d'autre part, à la transmission de cette adjacence aux autres routeurs du réseau de paquets (au moyen de l'unité de flooding 35), l'unité 2 peut demander à l'unité 3 de supprimer l'adjacence virtuelle par suppression, au moyen de l'unité de gestion des adjacences virtuelles 32, de la métrique Mv de la table 34.

On notera que pour les autres routeurs du réseau de paquets, la transformation de l'adjacence virtuelle en adjacence réelle consiste uniquement à modifier la métrique du lien considéré, puisqu'ils n'ont pas connaissance, en ce qui concerne le lien considéré, de cette notion de virtuel et de réel.

On notera encore que l'annonce de la métrique réelle aux routeurs autres que ceux d'extrémité du lien considéré n'est pas nécessaire et, n'est donc avantageusement pas réalisée, lorsque la métrique virtuelle est choisie supérieure à la métrique réelle, dans la mesure où, dans ce cas, cette annonce n'aurait aucune incidence sur le routage.

Pour que la création soit effective, l'unité 2 fait appel à l'unité 5 de création/destruction de liens pour créer ledit lien entre lesdits deux routeurs dans le réseau de transport.

Inversement, lorsque l'unité 2 décide de supprimer la connexion réelle entre les deux routeurs considérés, elle demande à l'unité 3 de créer une adjacence virtuelle et de l'annoncer comme un lien classique avec la métrique virtuelle Mv dudit lien. Le système repasse dans l'état de connexion virtuelle CV (flèche c). L'unité de gestion des adjacences virtuelles 32 commande alors l'enregistrement dans la table 34 de la métrique virtuelle Mv pour le lien considéré. Après un temps excédant au moins le temps nécessaire, d'une part, à la création de cette adjacence virtuelle et, d'autre part, à la transmission de cette adjacence virtuelle aux autres routeurs du réseau de paquets, l'unité 2 demande à l'unité 3 de supprimer l'adjacence réelle par suppression, au moyen de l'unité de gestion des adjacences réelles 31, de la métrique Mr de la table 33.

Pour que cette création soit effective, l'unité 2 fait appel à l'unité 5 de création/destruction de liens pour supprimer ledit lien entre lesdits deux routeurs dans le réseau de transport.

Avantageusement, lorsqu'une liaison entre deux routeurs est dans l'état de connexion virtuelle, l'unité 2 déclenche un processus de vérification régulier de la connectivité réelle entre les deux routeurs d'extrémité de l'adjacence virtuelle. Il y a connectivité réelle lorsqu'il existe un chemin entre deux routeurs constitué de liens réels, c'est-à-dire lorsque le trafic peut être acheminé, directement ou indirectement, entre ces deux routeurs. Ce processus est pris en charge par une unité de connectivité 36. Lorsque l'unité de connectivité 36 détecte une perte de connectivité, elle en informe l'unité de gestion 32 qui supprime alors l'adjacence virtuelle de la table 34. A titre d'illustration, l'unité de connectivité pourrait utiliser une liaison dite TE-LSP entre les deux routeurs concernés. La liaison entre les deux routeurs repasse dans l'état non-connecté NC (flèche d).

Dans la mesure où, lorsqu'une liaison se trouve dans l'état connecté, le test de connectivité est pris en charge par le protocole de routage (par exemple par le protocole dit Hello), l'unité 2 peut commander à l'unité de connectivité 36 l'arrêt du processus de vérification de la connectivité lors de la commande de la suppression d'une adjacence virtuelle de la table 34 et la création d'une adjacence réelle.

On comprendra que l'attribution des métriques Mv et Mr à un lien particulier déterminera le comportement du système, notamment en ce qui concerne l'impact sur le routage des paquets du réseau de paquets (par exemple des paquets IP) de la création/destruction de liens réels. On appelle métrique Mr(1) la métrique du lien 1, Mc(A-B) la somme des métriques Mr(li), avec li représentant un lien parmi tous les liens constituant le plus court chemin entre les routeurs A et B. On notera encore Mr(A-B) la métrique réelle du lien liant directement les routeurs A et B et Mv(A-B) la métrique virtuelle du lien liant directement les routeurs A et B.

Différentes politiques de choix des valeurs Mr et MV annoncées sont possibles selon les valeurs relatives de Mr(A-B) et de Mv(A-B), mais aussi selon les valeurs relatives de Mc(A-B) et Mv(A-B). Au total, les quatre cas suivants peuvent être considérés :
1) Mr(A-B) = Mv(A-B) = Mc(A-B)
2) Mr(A-B) = Mv(A-B) < Mc(A-B)
3) Mr(A-B) < Mv(A-B) = Mc(A-B)
4) Mr(A-B) < Mv(A-B) < Mc(A-B)

Ces quatre cas dépendent de la valeur prise par la métrique Mv(A-B), d'une part, relativement à la somme des métriques Mc(A-B) et, d'autre part, relativement à la métrique réelle Mr(A-B).

L'opérateur du réseau de paquets choisit telle politique plutôt qu'une autre suivant qu'il souhaite modifier ou non, avant ou après la création d'un lien réel A-B, le routage du trafic vers ce lien A-B.

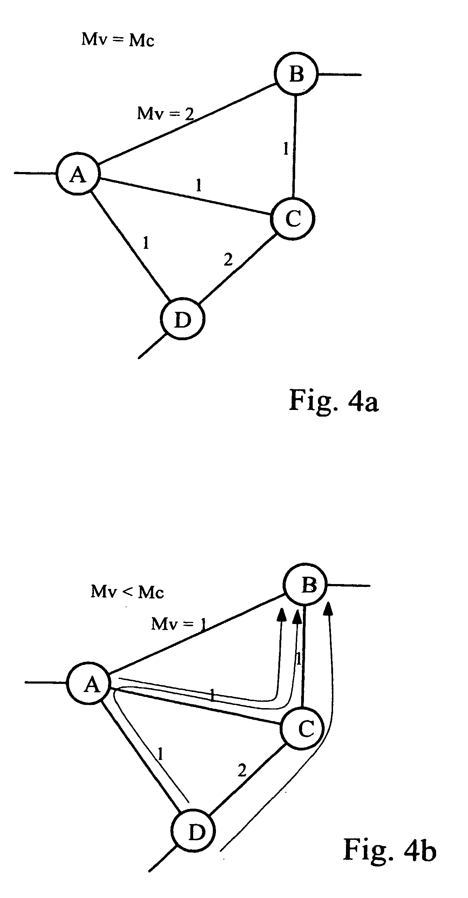

Aux Figs. 4a et 4b, on considère un réseau de paquets constitué de quatre routeurs A, B, C et D. On n'a pas représenté le réseau coeur correspondant puisque cela n'est pas nécessaire. On suppose deux liaisons : l'une allant de A vers B, l'autre allant de D vers B. Au moment considéré, la liaison entre les routeurs A et B est assurée via le routeur C et la liaison entre le routeur D et le routeur B est assurée via le routeur A et également le routeur C.

On se place du point de vue du routeur A. Puisque la connexion entre les routeurs A et B n'est pas effectuée, une adjacence virtuelle AB de métrique Mv est créée dans la table des adjacences virtuelles. La liaison entre les routeurs A et B est dans l'état non-connecté de la Fig. 3. L'adjacence virtuelle créée est notifiée aux autres routeurs du réseau, notamment aux routeurs C et D.

Dans le cas de la Fig. 4a, la métrique Mv du lien virtuel entre les routeurs A et B est égale à la métrique Mc du chemin ACB, soit dans l'exemple donné 2 (les métriques affectées aux liens sont représentées par des chiffres au voisinage des traits représentant les liens). On peut remarquer que pour le routeur D, les trois chemins DCB, DACB et DAB ont la même métrique égale à trois. Le routeur D partage alors son trafic entre la destination du routeur A et celle du routeur C.

On mesure, par toute méthode appropriée, le débit total moyen sur tout chemin entre les routeurs A et B, incluant par conséquent le trafic circulant entre les routeurs A et B, mais aussi le trafic circulant entre les routeurs D et B par le chemin DACB, par exemple. Lorsque ce débit total moyen devient supérieur à un débit seuil, le lien direct AB est créé. Il porte alors la métrique Mr. Le trafic AB passe donc par ce lien. Il en est de même d'une partie du trafic du routeur D vers le routeur B.

On constate que le routage qui est effectué aussi bien par le routeur C que le routeur D (tous les routeurs à l'exception des routeurs d'extrémité du lien considéré) est mis en place au moment où la liaison est déclarée dans l'état de connexion virtuelle et n'est pas modifié après le passage à l'état de connexion réelle de la liaison. En conséquence, la répartition du trafic à travers le réseau de paquets n'est pas modifiée après la création du lien direct A-B et il en résulte une stabilité du routage obtenue grâce à l'invention.

Dans le cas de la Fig. 4b, la métrique Mv du lien virtuel entre les routeurs A et B est inférieure à la métrique Mc du chemin ACB, soit dans l'exemple donné 1. On peut remarquer que pour le routeur D, le chemin le plus court est le chemin DAB dont la métrique est égale à 2 (et non le chemin DCB ou DACB comme cela aurait pu être le cas avec la méthode de l'état de la technique où n'est pas utilisée la métrique Mv). Le routeur D va donc aiguiller son trafic vers le routeur A. Le chemin suivi par ce trafic est par conséquent, pour l'instant, le chemin DACB.

Comme précédemment, on mesure le débit total moyen sur le chemin entre les routeurs A et B, incluant par conséquent le trafic circulant entre les routeurs A et B, mais aussi le trafic circulant entre les routeurs D et B par le chemin DACB. Lorsque ce débit total moyen est supérieur à un débit seuil, le lien direct AB est créé. Le trafic AB passe donc par ce lien. Il en est de même du trafic DB. Dans ce cas, avant la création du lien direct A-B, le trafic est attiré vers ce lien qui n'est alors qu'encore virtuel.

On constate également que le routage qui est effectué aussi bien par le routeur C que le routeur D (tous les routeurs à l'exception des routeurs d'extrémité du lien considéré) est mis en place au moment où la liaison est déclarée dans l'état de connexion virtuelle et n'est pas modifié après le passage à l'état de connexion réelle de la liaison. En conséquence, la répartition du trafic à travers le réseau de paquets n'est pas modifiée après la création du lien direct A-B. Il en résulte une stabilité du routage obtenue grâce à l'invention.

Dans l'un ou l'autre cas, une fois le lien A-B créé, la métrique Mr est appliquée au lien direct A-B. On se retrouve dans l'état de connexion réelle CR de la Fig. 3.

Dans la mesure où la métrique Mr est égale à la métrique Mv, il n'y a pas de modification de routage après création du lien direct A-B, hormis le routage effectué par les routeurs A et B.

Par contre, si la métrique Mr est inférieure à la métrique Mv, le trafic est attiré vers le lien direct A-B. On comprendra qu'il y a modification du trafic à travers le réseau.

Lorsque le débit total moyen sur un lien, par exemple le lien entre les routeurs A et B, tombe en dessous d'un seuil bas, ce lien est physiquement supprimé et la métrique affectée à ce lien devient, pour ces routeurs, une métrique virtuelle Mv (état de connexion virtuelle de la Fig. 3). Si la valeur de cette métrique est supérieure à la valeur de la métrique réelle sur ce lien, le routage effectué par les routeurs, notamment les routeurs autres que les routeurs d'extrémité (en l'occurrence les routeurs C et D) va être modifié. Cela ne sera par contre pas le cas si la valeur de la métrique réelle est égale à la valeur de la métrique virtuelle.

Pour pouvoir mesurer le débit total du trafic qui transite entre les routeurs A et B, il peut être avantageux d'établir entre ces deux routeurs A et B un chemin dit TE-LSP (Traffic Engineering - Label Switching Path) qui agrège tout le trafic, direct ou indirect, entre ces deux routeurs. Cette méthode particulière permet d'éviter un routage du trafic où suite à des choix de métriques particulières, des boucles pourraient se produire.

## Revendications

1. Procédé de contrôle du routage dans un réseau de paquets supporté par un réseau de transport autorisant la création/destruction dynamique de liens de transport des paquets dudit réseau de paquets,
ledit procédé incluant, pour un premier routeur :
- une étape de routage qui, en fonction d'une métrique affectée à chaque lien du réseau de paquets, détermine le chemin le plus court entre ledit premier routeur et un deuxième routeur,
- une étape d'information aux autres routeurs dudit réseau de la métrique affectée à chaque lien du réseau de paquets,
- une étape de création/destruction d'un lien de transport entre ledit premier routeur et ledit deuxième routeur lorsque lesdits routeurs sont susceptibles d'être connectés directement par un lien et que le trafic entre lesdits deux routeurs remplit des conditions de création/destruction, ledit lien, une fois créé, étant dans un état de connexion réelle avec une métrique, dite métrique réelle, affectée,
**caractérisé en ce qu'**en outre :
lorsque lesdits routeurs sont susceptibles d'être connectés directement par un lien mais que le trafic entre lesdits deux routeurs ne remplit pas lesdites conditions de création, on affecte audit lien une métrique, dite métrique virtuelle, et on annonce aux autres routeurs ladite métrique virtuelle affectée audit lien, lesdits autres routeurs n'ayant pas connaissance du caractère virtuel dudit lien et ledit lien étant dans un état de connexion virtuelle.

2. Procédé de contrôle du routage dans un réseau de paquets selon la revendication 1, **caractérisé en ce que** pour un lien entre deux routeurs dans un état de connexion virtuelle, la valeur de la métrique virtuelle est choisie relativement à celle de la métrique réelle soit égale soit inférieure.

3. Procédé de contrôle du routage dans un réseau de paquets selon la revendication 1 ou 2, **caractérisé en ce que** pour un lien entre deux routeurs dans un état de connexion virtuelle, la valeur de la métrique virtuelle est choisie relativement à celle de la somme des métriques réelles des chemins indirects reliant lesdits deux routeurs soit égale soit inférieure.

4. Procédé de contrôle du routage dans un réseau de paquets selon l'une quelconque des revendications précédentes, **caractérisé en ce que** lorsqu'un lien est dans un état de connexion virtuelle, un test de connectivité est réalisé.

5. Système de contrôle du routage dans un réseau de paquets supporté par un réseau de transport autorisant la création/destruction dynamique de liens de transport des paquets dudit réseau de paquets, ledit système comprenant :
- une unité (3) de gestion des liens du réseau de paquets, agencée pour déterminer, en fonction d'une métrique affectée à chaque lien du réseau de paquets, le chemin le plus court entre un premier routeur et un deuxième routeur et pour annoncer aux autres routeurs dudit réseau la métrique affectée à chaque lien du réseau de paquets,
- une unité (5) de création/destruction d'un lien de transport entre un premier routeur et un deuxième routeur lorsque lesdits routeurs sont susceptibles d'être connectés directement par un lien et que le trafic entre lesdits deux routeurs remplit des conditions de création/destruction, et
- une unité (2) de gestion dynamique de la topologie du réseau, agencée pour commander ladite unité (5) de création/destruction d'un lien de transport de manière à créer une connexion réelle entre deux routeurs et commander ladite unité (3) de gestion des liens du réseau de paquets de manière à créer une adjacence réelle et à annoncer ladite adjacence réelle comme un lien avec une métrique, dite métrique réelle, lorsque lesdits routeurs sont susceptibles d'être connectés directement par un lien et que le trafic entre lesdits deux routeurs remplit lesdites conditions de création, **caractérisé en ce que** ladite unité (2) de gestion dynamique de la topologie du réseau est en outre agencée pour :
- commander ladite unité (3) de gestion des liens du réseau de paquets de manière à créer une adjacence virtuelle et à annoncer ladite adjacence virtuelle comme un lien avec une métrique, dite métrique virtuelle, lorsque deux routeurs sont susceptibles d'être connectés directement par un lien et le trafic entre lesdits deux routeurs ne remplit pas lesdites conditions de création/destruction.

6. Système de contrôle du routage dans un réseau de paquets selon la revendication 5, **caractérisé en ce que** ladite unité (3) de gestion des liens du réseau de paquets comporte une unité (36) de test de connectivité pour tester la connectivité dudit lien.

7. Système de contrôle du routage dans un réseau de paquets selon la revendication 5 ou 6, **caractérisé en ce que** ladite unité de gestion (3) des liens du réseau de paquets comprend en outre une unité de gestion des adjacences réelles (31) associée à une table des adjacences réelles (33) et une unité de gestion des adjacences virtuelles (32) associée à une table des adjacences virtuelles (34), ladite unité de gestion (3) des liens du réseau de paquets étant prévue pour annoncer aux autres routeurs dudit réseau les métriques contenues dans l'une et l'autre desdites tables (33, 34).

8. Unité (2) de gestion dynamique de la topologie d'un réseau de paquets supporté par un réseau de transport autorisant la création/destruction dynamique de liens de transport des paquets dudit réseau de paquets, ladite unité étant prévue pour :
- commander une unité de gestion (3) des liens du réseau de paquets, agencée pour déterminer en fonction d'une métrique affectée à chaque lien du réseau de paquets, le chemin le plus court entre un premier routeur et un deuxième routeur et pour annoncer aux autres routeurs dudit réseau la métrique affectée à chaque lien du réseau de paquets,
- commander une unité (5) pour la création/destruction d'un lien de transport entre un premier routeur et un deuxième routeur lorsque lesdits routeurs sont susceptibles d'être connectés directement par un lien et que le trafic entre lesdits deux routeurs remplit des conditions de création/destruction, et
- lorsque lesdits routeurs sont susceptibles d'être connectés directement par un lien et que le trafic entre lesdits deux routeurs remplit lesdites conditions de création, commander ladite unité (5) de création/destruction de manière à créer une connexion réelle entre lesdits deux routeurs et commander ladite unité de gestion (3) des liens du réseau de paquets de manière à créer une adjacence réelle et à annoncer ladite adjacence réelle comme un lien avec une métrique, dite métrique réelle,
**caractérisée en ce qu'**elle est en outre prévue pour :
- commander ladite unité de gestion (3) des liens du réseau de paquets de manière à créer une adjacence virtuelle et à annoncer ladite adjacence virtuelle comme un lien avec une métrique, dite métrique virtuelle, lorsque deux routeurs sont susceptibles d'être connectés directement par un lien mais que le trafic entre lesdits deux routeurs ne remplit pas lesdites conditions de création.

9. Unité de gestion (3) des liens d'un réseau de paquets supporté par un réseau de transport autorisant la création/destruction dynamique de liens de transport des paquets dudit réseau de paquets, ladite unité déterminant, en fonction d'une métrique affectée à chaque lien du réseau de paquets, le chemin le plus court entre un premier routeur et un deuxième routeur et annonçant aux autres routeurs dudit réseau la métrique affectée à chaque lien du réseau de paquets, ladite unité de gestion (3) étant destinée à la mise en oeuvre du procédé selon la revendication 1 à 4, **caractérisée en ce qu'**elle inclut une unité de gestion des adjacences réelles (31) associée à une table des adjacences réelles (33) et une unité de gestion des adjacences virtuelles (32) associée à une table des adjacences virtuelles (34), ladite unité de gestion (3) étant prévue pour annoncer aux autres routeurs dudit réseau les métriques contenues dans l'une et l'autre desdites tables (33, 34).

10. Système de routage de paquets dans un réseau de paquets supporté par un réseau de transport autorisant la création/destruction dynamique de liens de transport, comprenant une pluralité de routeurs (A, B, C, D) de paquets dans le réseau de paquets, **caractérisé en ce qu'**il comprend au moins une unité (2) de gestion dynamique de la topologie du réseau selon la revendication 8, au moins une unité (3) de gestion des liens du réseau de paquets selon la revendication 9 et au moins une unité (5) de création/destruction d'un lien de transport entre un premier routeur et un deuxième routeur lorsque lesdits routeurs sont susceptibles d'être connectés directement par un lien et que le trafic entre lesdits deux routeurs remplit des conditions de création/destruction.

## Claims

1. Method for controlling routing in a packet network supported by a transport network permitting the dynamic creation/destruction of transport links for the packets of said packet network,
said method including, for a first router:
- a routing step which, as a function of a metric assigned to each link of the packet network, determines the shortest path between said first router and a second router,
- a step of informing the other routers of said network of the metric assigned to each link of the packet network,
- a step of creating/destroying a transport link between said first router and said second router when said routers are apt to be connected directly by a link and the traffic between said two routers fulfils creation/destruction conditions, said link, once created, being in a state of real connection with an assigned metric, termed a real metric,
**characterized in that** furthermore:
when said routers are apt to be connected directly by a link but the traffic between said two routers does not fulfil said creation conditions, a metric, termed a virtual metric, is assigned to said link, and said virtual metric assigned to said link is announced to the other routers, said other routers being unaware of the virtual nature of said link and said link being in a state of virtual connection.

2. Method for controlling routing in a packet network according to Claim 1, **characterized in that** for a link between two routers in a state of virtual connection, the value of the virtual metric is chosen in relation to that of the real metric as either equal or lower.

3. Method for controlling routing in a packet network according to Claim 1 or 2, **characterized in that** for a link between two routers in a state of virtual connection, the value of the virtual metric is chosen in relation to that of the sum of the real metrics of the indirect paths linking said two routers as either equal or lower.

4. Method for controlling routing in a packet network according to any one of the preceding claims, **characterized in that** when a link is in a state of virtual connection, a connectivity test is carried out.

5. System for controlling routing in a packet network supported by a transport network permitting the dynamic creation/destruction of transport links for the packets of said packet network, said system comprising:
- a unit (3) for managing the links of the packet network, which is devised so as to determine, as a function of a metric assigned to each link of the packet network, the shortest path between a first router and a second router and to announce to the other routers of said network the metric assigned to each link of the packet network,
- a unit (5) for creating/destroying a transport link between a first router and a second router when said routers are apt to be connected directly by a link and the traffic between said two routers fulfils creation/destruction conditions, and
- a unit (2) for dynamically managing the topology of the network, devised so as to control said unit (5) for creating/destroying a transport link in such a way as to create a real connection between two routers and to control said unit (3) for managing the links of the packet network in such a way as to create a real adjacency and announce said real adjacency as a link with a metric, termed a real metric, when said routers are apt to be connected directly by a link and the traffic between said two routers fulfils said creation conditions,
**characterized in that** said unit (2) for dynamically managing the topology of the network is furthermore devised so as to:
- control said unit (3) for managing the links of the packet network in such a way as to create a virtual adjacency and to announce said virtual adjacency as a link with a metric, termed a virtual metric, when two routers are apt to be connected directly by a link and the traffic between said two routers does not fulfil said creation/destruction conditions.

6. System for controlling routing in a packet network according to Claim 5, **characterized in that** said unit (3) for managing the links of the packet network comprises a connectivity test unit (36) for testing the connectivity of said link.

7. System for controlling routing in a packet network according to Claim 5 or 6, **characterized in that** said unit (3) for managing the links of the packet network furthermore comprises a unit for managing the real adjacencies (31) which is associated with a table of the real adjacencies (33) and a unit for managing the virtual adjacencies (32) which is associated with a table of the virtual adjacencies (34), said unit (3) for managing the links of the packet network being designed to announce to the other routers of said network the metrics contained in one and the other of said tables (33, 34).

8. Unit (2) for dynamically managing the topology of a packet network supported by a transport network permitting the dynamic creation/destruction of transport links for the packets of said packet network, said unit being designed to:
- control a unit (3) for managing the links of the packet network, which is devised so as to determine as a function of a metric assigned to each link of the packet network, the shortest path between a first router and a second router and to announce to the other routers of said network the metric assigned to each link of the packet network,
- control a unit (5) for creating/destroying a transport link between a first router and a second router when said routers are apt to be connected directly by a link and the traffic between said two routers fulfils the creation/destruction conditions, and
- when said routers are apt to be connected directly by a link and the traffic between said two routers fulfils said creation conditions, control said unit (5) for creating/destroying in such a way as to create a real connection between said two routers and control said unit (3) for managing the links of the packet network in such a way as to create a real adjacency and to announce said real adjacency as a link with a metric, termed a real metric,
**characterized in that** it is furthermore designed to:
- control said unit (3) for managing the links of the packet network in such a way as to create a virtual adjacency and to announce said virtual adjacency as a link with a metric, termed a virtual metric, when two routers are apt to be connected directly by a link but the traffic between said two routers does not fulfil said creation conditions.

9. Unit (3) for managing the links of a packet network supported by a transport network permitting the dynamic creation/destruction of transport links for the packets of said packet network, said unit determining, as a function of a metric assigned to each link of the packet network, the shortest path between a first router and a second router and announcing to the other routers of said network the metric assigned to each link of the packet network, said management unit (3) being intended for the implementation of the method according to Claim 1 to 4, **characterized in that** it includes a unit for managing the real adjacencies (31) which is associated with a table of the real adjacencies (33) and a unit for managing the virtual adjacencies (32) which is associated with a table of the virtual adjacencies (34), said management unit (3) being designed to announce to the other routers of said network the metrics contained in one and the other of said tables (33, 34).

10. System for routing packets in a packet network supported by a transport network permitting the dynamic creation/destruction of transport links, comprising a plurality of routers (A, B, C, D) for packets in the packet network, **characterized in that** it comprises at least one unit (2) for dynamically managing the topology of the network according to Claim 8, at least one unit (3) for managing the links of the packet network according to Claim 9 and at least one unit (5) for creating/destroying a transport link between a first router and a second router when said routers are apt to be connected directly by a link and the traffic between said two routers fulfils creation/destruction conditions.

## Patentansprüche

1. Verfahren zur Routing-Kontrolle in einem von einem Transportnetzwerk unterstützten Paketnetzwerk, das die dynamische Erzeugung/Zerstörung von Transportlinks der Pakete des Paketnetzwerks erlaubt,
wobei das Verfahren für einen ersten Router umfasst:
- einen Routing-Schritt, der abhängig von einer jedem Link des Paketnetzwerks zugewiesenen Metrik den kürzesten Weg zwischen dem ersten Router und einem zweiten Router bestimmt,
- einen Schritt der Information der anderen Router des Netzwerks über die jedem Link des Paketnetzwerks zugewiesene Metrik,
- einen Schritt der Erzeugung/Zerstörung eines Transportlinks zwischen dem ersten Router und dem zweiten Router, wenn die Router direkt von einem Link verbunden werden können, und wenn der Verkehr zwischen den zwei Routern Bedingungen der Erzeugung/Zerstörung erfüllt, wobei das Link, wenn es erzeugt ist, sich in einem Zustand der realen Verbindung mit einer zugewiesenen so genannten realen Metrik befindet,
**dadurch gekennzeichnet, dass** außerdem:
wenn die Router direkt von einem Link verbunden werden können, der Verkehr zwischen den zwei Routern aber nicht die Erzeugungsbedingungen erfüllt, dem Link eine so genannte virtuelle Metrik zugewiesen wird, und den anderen Routern die dem Link zugewiesene virtuelle Metrik mitgeteilt wird, wobei die anderen Router die virtuelle Eigenschaft des Links nicht kennen und
das Link in einem Zustand virtueller Verbindung ist.

2. Verfahren zur Routing-Kontrolle in einem Paketnetzwerk nach Anspruch 1, **dadurch gekennzeichnet, dass** für ein Link zwischen zwei Routern in einem Zustand virtueller Verbindung der Wert der virtuellen Metrik bezüglich desjenigen der realen Metrik entweder gleich oder geringer gewählt wird.

3. Verfahren zur Routing-Kontrolle in einem Paketnetzwerk nach Anspruch 1 oder 2, **dadurch gekennzeichnet, dass** für ein Link zwischen zwei Routern in einem Zustand virtueller Verbindung der Wert der virtuellen Metrik bezüglich desjenigen der Summe der realen Metriken der die zwei Router verbindenden indirekten Wege entweder gleich oder geringer gewählt wird.

4. Verfahren zur Routing-Kontrolle in einem Paketnetzwerk nach einem der vorhergehenden Ansprüche, **dadurch gekennzeichnet, dass**, wenn ein Link in einem Zustand virtueller Verbindung ist, ein Konnektivitätstest durchgeführt wird.

5. System zur Routing-Kontrolle in einem von einem Transportnetzwerk unterstützten Paketnetzwerk, das die dynamische Erzeugung/Zerstörung von Transportlinks der Pakete des Paketnetzwerks erlaubt, wobei das System enthält:
- eine Verwaltungseinheit (3) der Links des Paketnetzwerks, die eingerichtet ist, um abhängig von einer jedem Link des Paketnetzwerks zugewiesenen Metrik den kürzesten Weg zwischen einem ersten Router und einem zweiten Router zu bestimmen, und um den anderen Routern des Netzwerks die jedem Link des Paketnetzwerks zugewiesene Metrik mitzuteilen,
- eine Einheit (5) zur Erzeugung/Zerstörung eines Transportlinks zwischen einem ersten Router und einem zweiten Router, wenn die Router direkt von einem Link verbunden werden können, und wenn der Verkehr zwischen den zwei Routern Bedingungen der Erzeugung/Zerstörung erfüllt, und
- eine Einheit (2) zur dynamischen Verwaltung der Topologie des Netzwerks, die eingerichtet ist, um die Einheit (5) zur Erzeugung/Zerstörung eines Transportlinks derart zu steuern, dass eine reale Verbindung zwischen zwei Routern erzeugt wird, und die Verwaltungseinheit (3) der Links des Paketnetzwerks so zu steuern, dass eine reale Adjazenz erzeugt wird, und die reale Adjazenz als ein Link mit einer so genannten realen Metrik anzuzeigen, wenn die Router direkt von einem Link verbunden werden können, und wenn der Verkehr zwischen den zwei Routern die Erzeugungsbedingungen erfüllt, **dadurch gekennzeichnet, dass** die Einheit (2) zur dynamischen Verwaltung der Topologie des Netzwerks außerdem eingerichtet ist, um:
- die Verwaltungseinheit (3) der Links des Paketnetzwerks so zu steuern, dass eine virtuelle Adjazenz erzeugt wird, und um die virtuelle Adjazenz als ein Link mit einer so genannten virtuellen Metrik anzuzeigen, wenn zwei Router direkt von einem Link verbunden werden können, und wenn der Verkehr zwischen den zwei Routern die Bedingungen der Erzeugung/Zerstörung nicht erfüllt.

6. System zur Routing-Kontrolle in einem Paketnetzwerk nach Anspruch 5, **dadurch gekennzeichnet, dass** die Verwaltungseinheit (3) der Links des Paketnetzwerks eine Einheit (36) zum Konnektivitätstest aufweist, um die Konnektivität des Links zu testen.

7. System zur Routing-Kontrolle in einem Paketnetzwerk nach Anspruch 5 oder 6, **dadurch gekennzeichnet, dass** die Verwaltungseinheit (3) der Links des Paketnetzwerks außerdem eine Verwaltungseinheit der realen Adjazenzen (31), die einer Tabelle der realen Adjazenzen (33) zugeordnet ist, und eine Verwaltungseinheit der virtuellen Adjazenzen (32) enthält, die einer Tabelle der virtuellen Adjazenzen (34) zugeordnet ist, wobei die Verwaltungseinheit (3) der Links des Paketnetzwerks vorgesehen ist, um den anderen Routern des Netzwerks die in der einen und anderen Tabelle (33, 34) enthaltenen Metriken mitzuteilen.

8. Einheit (2) zur dynamischen Verwaltung der Topologie eines von einem Transportnetzwerk unterstützten Paketnetzwerks, das die dynamische Erzeugung/Zerstörung von Transportlinks der Pakete des Paketnetzwerks erlaubt, wobei die Einheit vorgesehen ist, um:
- eine Verwaltungseinheit (3) der Links des Paketnetzwerks zu steuern, die eingerichtet ist, um abhängig von einer jedem Link des Paketnetzwerks zugewiesenen Metrik den kürzesten Weg zwischen einem ersten Router und einem zweiten Router zu bestimmen, und um den anderen Routern des Netzwerks die jedem Link des Paketnetzwerks zugewiesene Metrik mitzuteilen,
- eine Einheit (5) zur Erzeugung/Zerstörung eines Transportlinks zwischen einem ersten Router und einem zweiten Router zu steuern, wenn die Router direkt von einem Link verbunden werden können, und wenn der Verkehr zwischen den zwei Routern Bedingungen der Erzeugung/Zerstörung erfüllt, und
- wenn die Router direkt von einem Link verbunden werden können, und wenn der Verkehr zwischen den zwei Routern die Erzeugungsbedingungen erfüllt, die Einheit (5) zur Erzeugung/Zerstörung so zu steuern, dass eine reale Verbindung zwischen den zwei Routern erzeugt wird, und die Verwaltungseinheit (3) der Links des Paketnetzwerks so zu steuern, dass eine reale Adjazenz erzeugt wird, und die reale Adjazenz als ein Link mit einer so genannten realen Metrik anzuzeigen,
**dadurch gekennzeichnet, dass** sie außerdem vorgesehen ist, um:
- die Verwaltungseinheit (3) der Links des Paketnetzwerks so zu steuern, dass eine virtuelle Adjazenz erzeugt wird, und die virtuelle Adjazenz als ein Link mit einer so genannten virtuellen Metrik anzuzeigen, wenn zwei Router direkt von einem Link verbunden werden können, der Verkehr zwischen den zwei Routern aber nicht die Erzeugungsbedingungen erfüllt.

9. Verwaltungseinheit (3) der Links eines von einem Transportnetzwerk unterstützten Paketnetzwerks, das die dynamische Erzeugung/Zerstörung von Transportlinks der Pakete des Paketnetzwerks erlaubt, wobei die Einheit abhängig von einer jedem Link des Paketnetzwerks zugewiesenen Metrik den kürzesten Weg zwischen einem ersten Router und einem zweiten Router bestimmt und den anderen Routern des Netzwerks die jedem Link des Paketnetzwerks zugewiesene Metrik mitteilt, wobei die Verwaltungseinheit (3) zur Durchführung des Verfahrens nach Anspruch 1 bis 4 bestimmt ist, **dadurch gekennzeichnet, dass** sie eine Verwaltungseinheit der realen Adjazenzen (31), die einer Tabelle der realen Adjazenzen (33) zugeordnet ist, und eine Verwaltungseinheit der virtuellen Adjazenzen (32) umfasst, die einer Tabelle der virtuellen Adjazenzen (34) zugeordnet ist, wobei die Verwaltungseinheit (3) vorgesehen ist, um den anderen Routern des Netzwerks die in der einen und anderen Tabelle (33, 34) enthaltenen Metriken mitzuteilen.

10. Routing-System von Paketen in einem von einem Transportnetzwerk unterstützten Paketnetzwerk, das die dynamische Erzeugung/Zerstörung von Transportlinks erlaubt, das mehrere Router (A, B, C, D) von Paketen im Paketnetzwerk enthält, **dadurch gekennzeichnet, dass** es mindestens eine Einheit (2) zur dynamischen Verwaltung der Topologie des Netzwerks nach Anspruch 8, mindestens eine Verwaltungseinheit (3) der Links des Paketnetzwerks nach Anspruch 9 und mindestens eine Einheit (5) zur Erzeugung/Zerstörung eines Transportlinks zwischen einem ersten Router und einem zweiten Router enthält, wenn die Router direkt von einem Link verbunden werden können, und wenn der Verkehr zwischen den zwei Routern Bedingungen der Erzeugung/Zerstörung erfüllt.
